Europäisches Patentamt

European Patent Office

Office européen des brevets

(19)

(11) Publication number: **0 335 502**
**A2**

## (12) EUROPEAN PATENT APPLICATION

(21) Application number: **89301921.6**

(22) Date of filing: **27.02.89**

(51) Int. Cl.⁴: **G06F 15/06**

(30) Priority: **30.03.88 US 176076**

(43) Date of publication of application:
**04.10.89 Bulletin 89/40**

(84) Designated Contracting States:
**AT BE CH DE ES FR GB GR IT LI LU NL SE**

(71) Applicant: **ADVANCED MICRO DEVICES, INC.**
**901 Thompson Place P.O. Box 3453**
**Sunnyvale, CA 94088(US)**

(72) Inventor: **O'Dell, Robert W.**
**3003-D Parker Lane**
**Austin Texas 78741(US)**
Inventor: **Allen, Bruce Randal**
**705 Leisurewoods Drive**
**Buda Texas 78610(US)**
Inventor: **Oliver, Arthur Benjamin**
**8403 Vaquero Cove**
**Austin Texas 78759(US)**
Inventor: **O'Brien, Robert O.**
**4210 Harecourt Drive**
**Austin Texas 78727(US)**
Inventor: **Kamath, Govinda V.**
**3907 Reynosa Drive**
**Austin Texas 78739(US)**

(74) Representative: **Wright, Hugh Ronald et al**
**Brookes & Martin 52/54 High Holborn**
**London WC1V 6SE(GB)**

(54) Microcontroller and associated method.

(57) A VLSI microcontroller is provided which comprises: a processor for processing digital information; storage circuitry for storing digital information; an internal bus for conducting digital information to and from the processor and the storage circuitry; a plurality of first external terminals; transfer circuitry for transferring digital information between the internal bus and the plurality of external terminals, the transfer circuitry being operable in either a bus mode or a port mode; wherein the transfer circuitry in the bus mode is responsive to first digital information conducted on the internal bus; and wherein the transfer circuitry in the port mode is response to second digital information conducted on said internal bus.

## MICROCONTROLLER AND ASSOCIATED METHOD

The invention relates generally to very large scale integrated circuits (VLSI) and more specifically to VLSI microcontrollers.

VLSI microcontrollers are used to control the operation of a wide variety of devices such as disk drives, microwave ovens and modems. One earlier VLSI microcontroller is illustrated in the "MOS Microprocessors and Peripherals 1985 Data Book" produced by Advanced Micro Devices, Inc. of Sunnyvale, California, at pages 4-24 through 4-51. VLSI microcontrollers generally include a central processing unit, internal memory for storing computer program information and data and include an internal bus for transferring program information and data to and from the CPU, the internal memory and other (on-chip) microcontroller components. Typically, such microcontrollers also include an assortment of input-output ports used for conducting digital information between the internal bus and devices to be controlled. Each port includes a plurality of external terminals suitable for sending and receiving digital signals.

While earlier VLSI microcontrollers have been successful, there have been shortcomings with their use. For example, such microcontrollers sometimes had too few ports to send and receive all of the desired signals. This shortage of ports was especially acute when the microcontroller employed external memory to store program information or data. Often, when a microcontroller employed external memory such as external RAM or ROM, one or more of the microcontroller's ports was exclusively dedicated to coupling the external memory to the microcontroller's internal bus. Unfortunately, the dedication of ports to external memory, left fewer ports available to send and receive digital information used to control other devices. Thus, the effectiveness of the microcontroller was reduced.

Consequently, designers often must build additional ports external to the chip. Unfortunately, the delay often attendant with the operation upon data inputted to the microcontroller internal bus through an external port is usually longer. Frequently, this delay was due at least in part to the fact that several machine cycles sometimes were necessary to complete even simple operations upon such data. For example, several machine cycles might be necessary to increment or decrement a byte of data.

In contrast, operations on internally stored data often required fewer machine cycles. One reason for this was that internally stored data can be stored in special function registers (SFRs). A typical SFR includes a register for storing digital information and address decoding logic for addressing the register. The contents of an SFR's register can be operated upon using direct address instructions. A direct address instruction directly specifies within the instruction an address of data to be operated upon. For example, the contents of such SFRs can be provided directly to the microcontroller's internal bus for provision to the CPU. As a result, there is no need to fetch data to be operated upon from external memory locations, and operations upon such data can be performed more quickly.

For example, in the course of the execution of a direct instruction causing the contents of an SFR to be incremented, an opcode byte for the increment instruction is provided on the internal bus. Subsequently, an address byte is provided on the internal bus to identify a target SFR containing the data to be incremented. In response, the target SFR provides its contents on the internal bus and the internal bus conducts them to the CPU. The CPU increments the data and provides the incremented data to the internal bus. The incremented data is conducted by the internal bus to the target SFR for storage. Thus, using a direct instruction to increment the data in an addressed SFR saves time by obviating the need to fetch the data to be incremented from some other memory location.

Direct instructions can be used for a variety of purposes. For example, they can be used: to move data to or from an accumulator or RAM or other SFRs; to push or pop the contents of an SFR onto a stack; to branch based upon the contents of an SFR such as compare and jump if not equal; to perform arithmetic operations such as add, subtract, increment or decrement; or to perform logical operations such as "AND", "OR", and "EXCLUSIVE-OR". Bit instructions can also be used for a variety of purposes. For example, they can be used: to set or clear a given bit in an SFR; to move a given bit between an SFR and a carry bit location; or to complement a given bit in an SFR. The above list of direct instructions and direct bit instructions is intended to be exemplary and not exhaustive.

Thus, there has existed a need for a VLSI microcontroller which does not suffer from a shortage of ports, even when some of its ports are dedicated to accessing external memory. Furthermore, there has been a need for such a microcontroller in which data inputted through a port can be operated upon as rapidly as data stored internally by the microcontroller in an SFR. The present invention meets these needs.

## SUMMARY OF THE INVENTION

The invention provides a novel VLSI microcontroller which includes a processor for processing digital information and storage circuitry for storing digital information. The new microcontroller also includes an internal bus for conducting digital information to and from the processor and the storage circuitry. Furthermore, it includes a plurality of first external terminals and transfer circuitry for transferring digital information between the plurality of first external terminals and the internal bus.

The transfer circuitry is operable in either a port mode or a bus mode. In the bus mode, it is responsive to first digital information provided on the internal bus. In the port mode, it is responsive to second digital information provided on the internal bus.

These and other features and advantages of the present invention will become more apparent from the following detailed description of an exemplary embodiment thereof, as illustrated in the accompanying drawings.

## BRIEF DESCRIPTION OF THE DRAWINGS

The purpose and advantages of the present invention will be apparent to those skilled in the art from the following detailed description in conjunction with the appended drawings in which:

Figure 1 is a block diagram of a VLSI microcontroller in accordance with the invention;

Figure 2 is a schematic diagram of an expansion bus of the microcontroller of Fig. 1;

Figure 3 is a block diagram of a port expansion mode control circuit of the microcontroller of Fig. 1;

Figure 4 is a block diagram of a read detection circuit of the microcontroller of Fig. 1;

Figure 5 is a block diagram of a disabling control circuit of the microcontroller of Fig. 1;

Figure 6 is a block diagram of a PXS signal generator of the microcontroller of Fig. 1;

Figure 7 provides timing diagrams illustrating the operation of the set control circuit and the reset control circuit of the PXS generator of Fig. 6;

Figure 8 is a block diagram of a system incorporating the microcontroller of Fig. 1; and

Figure 9 provides timing diagrams illustrating the operation of the circuit of Fig. 8.

## DESCRIPTION OF THE PREFERRED EMBODIMENT

The present invention comprises a novel VLSI microcontroller and a novel method for communicating digital information between external terminals of a VLSI microcontroller and its internal bus. The following description is presented to enable any person skilled in the art to make and use the invention, and is provided in the context of a particular application and its requirements. Various modifications to the preferred embodiment will be readily apparent to those skilled in the art, and the generic principles defined herein may be applied to other embodiments and applications without departing from the spirit and scope of the invention. Thus, the present invention is not intended to be limited to the embodiment shown, but is to be accorded the widest scope consistent with the principles and features disclosed herein.

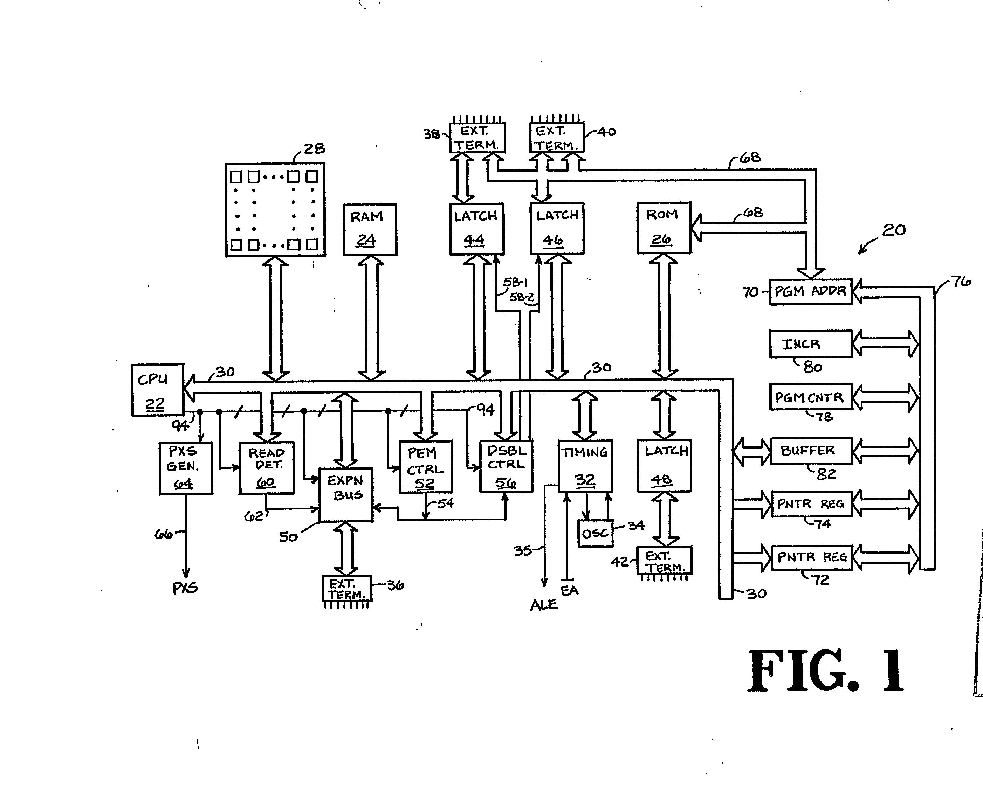

Figure 1 provides a block diagram of a presently preferred embodiment of a microcontroller 20 in accordance with the present invention. The microcontroller 20 includes a central processing unit 22 and internal memory including random access memory 24, read only memory 26 and a plurality of special function registers (SFRs) 28.

The SFRs 28 are responsive to direct instructions and/or direct bit instructions which cause the CPU 22 to operate directly on digital information stored in such SFRs 28. Direct instructions eliminate the need to retrieve digital information from other memory locations outside of the microcontroller 20. Instead, the digital information stored within a respective SFR 28 can be used immediately without the need to await its retrieval. Different individual SFRs 28 can be used in the execution of different instructions. For example, some SFRs can be used in single bit operations while others cannot.

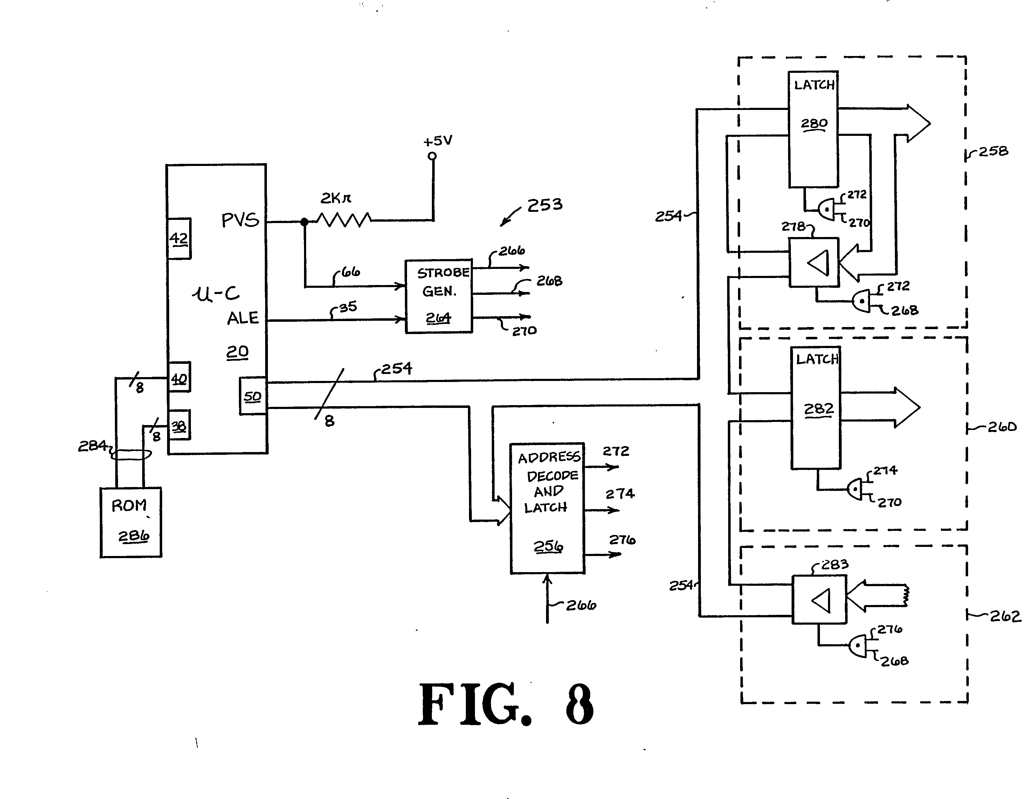

The CPU 22 is coupled to the RAM 24, the ROM 26 and the SFRs 28 and to other components of the microcontroller 20, by an 8-bit internal bus 30. Digital information including program instructions, address information and data is communicated between the CPU 22 and the internal memory by the internal bus 30. Timing circuitry 32 in conjunction with an oscillator 34 is coupled to the internal bus 30 to control signal timing. The timing circuitry 32 also provides an address latch enable (ALE) signal on external terminal 35 as discussed below. The ALE signal can be used to control the address latches of external memory discussed below and shown in Fig. 8.

The microcontroller 20 can provide digital information to an external environment and can receive digital information from the external environment through four respective ports, each of which comprise eight respective externally accessible terminals. A set of eight first external terminals 36 are included as part of one port, and respective sets of eight second, third and fourth external terminals 38, 40 and 42 are included as part of the three other ports.

Digital information to be transferred from the internal bus 30 to either the respective second, third or fourth external terminals 38, 40 or 42 is first latched by respective latch circuits 44, 46 or 48. Conversely, digital information to be transferred from either the respective second, third or fourth external terminals 38, 40 or 42 to the internal bus 30 may also be first latched by respective latch circuits 44, 46 or 48. Alternatively, digital information can be read directly from the external terminals 38, 40, or 42 bypassing the latch circuits 44, 46, or 48. Thus, digital information transferred between the internal bus 30 and either the second, third or fourth external terminals 38, 40 or 42 may be latched as an intermediate step in the transfer.

The first external terminals 36 are coupled to the internal bus 30 through a novel expansion bus 50. The expansion bus 50 can operate in an ordinary port mode (OPM) in which it behaves like the respective latch circuits 44, 46 or 48. Alternatively, the expansion bus 50 can operate in a port expansion mode (PEM) in which it behaves more like a bus for transferring digital information between the internal bus 30 and the first external terminals 36.

PEM control circuitry 52 provides on line 54 a PEXEN signal which determines whether the expansion bus 50 is in the OPM or PEM. When the PEXEN signal is in the logical 1 state, the expansion bus 50 operates in PEM, and when the PEXEN signal is in logical 0 state, the expansion bus 50 operates in OPM. The PEXEN signal also controls the operation of disabling control circuitry 56 which provides on lines 58-1 and 58-2 signals which can respectively prevent the latch circuits 44 and 46 from latching digital information provided to the internal bus 30 on external terminals 38 or 40.

In the VLSI microcontroller 20 of the presently preferred embodiment, there is address space for one hundred and twenty-eight SFRs 28. However, only twenty-seven SFRs have actually been implemented on the microcontroller 20. Of the one hundred and one remaining SFR addresses, fifteen are reserved for use in PEM. Address decoding logic, described below, is implemented on the microcontroller 20 for the fifteen reserved SFR addresses, but the registers corresponding to these reserved addresses are not implemented on the microcontroller chip. As explained below, the reserved SFR addresses can be used in PEM to couple SFRs implemented external to the microcontroller 20 the internal bus 30. Since these externally implemented SFRs are addressed using reserved SFR addresses which can be used with direct address instructions, digital information in the external SFRs can be operated upon directly by the CPU 22. Consequently, the speed with which the microcontroller 20 can process digital information stored external to the microcontroller chip is enhanced.

Read detection circuitry 60 provides on line 62 a PEXPORTIN signal which indicates when digital information is to be transferred via the expansion bus 50 to the internal bus 30 for input to one of the respective designated SFR address. When the expansion bus 50 is in PEM, it can transfer digital information from the first external terminals 36 to the internal bus 30 only when PEXPORTIN is in a logical 1 state.

A port expansion signal (PXS) generator 64 provides on external terminal 66 a PXS signal. The PXS signal can be used, as explained below, in conjunction with the ALE signal to identify the type of signals provided to the first external terminals 36 substantially contemporaneously with the provision of such signals to the terminals 36. As explained below, the PXS and ALE signals cooperate to provide a plurality of respective two-signal patterns which respectively indicate whether signals provided on the first external terminals 36 represent address information or represent digital information to be provided to the internal bus 30 or represent digital information received from the internal bus 30.

A 16-bit program address bus 68 couples the respective second and third external terminals 38 and 40 to a program address register 70. Frequently, in operation the microcontroller 20 is coupled to external memory in the form of RAM or ROM, as illustrated and discussed with reference to Fig. 8. The external memory provides storage for program information and data. Signals provided via the program address bus 68, for example, can indicate the address location of program information or data to be retrieved from or provided to such external memory.

Depending upon the size of the external memory, 16-bits may be necessary to address all of its memory locations. The second and third external terminals 38 and 40 can be used together to provide an

4

address signal up to 16-bits wide. Alternatively, for example, some of the second or third external terminals 38 and 40 can be used to transfer program information or data between external memory and the microcontroller 20, while others provide address information.

When the respective second and third external terminals 38 and 40 are coupled to such external memory the CPU 22, for example, can provide respective 8-bit address pointer signals, via the 8-bit internal bus 30, to 8-bit first and second 8-bit pointer registers 72 and 74. The address pointer signals are conducted via a second internal bus 76, to a program address register 70 for provision via the program address bus 68 to the first and second external terminals 38 and 40. The address pointer signals point to address locations to be accessed within external memory.

A program counter 78, for example, keeps track of the address of the next byte to be fetched as part of the execution of an instruction by the CPU 22. It will be understood, of course, that the execution of an instruction can involve the retrieval of multiple bytes of digital information to be processed by the CPU 22 in a prescribed sequence. An incrementer 80 increments the count of the program counter 78 at appropriate time intervals. The program counter 78 may, for example, identify the location of the next byte to be fetched as being a memory location within the ROM 26. At an appropriate time interval, the program counter 78 provides the address of the memory location, via the second internal bus 76, to the program address register 70 which, in turn, provides the memory location to the ROM 26 via program address bus 68.

Buffer 82 can be used to transfer digital information between the respective second and third external terminals 38 and 40 and the internal bus 30.

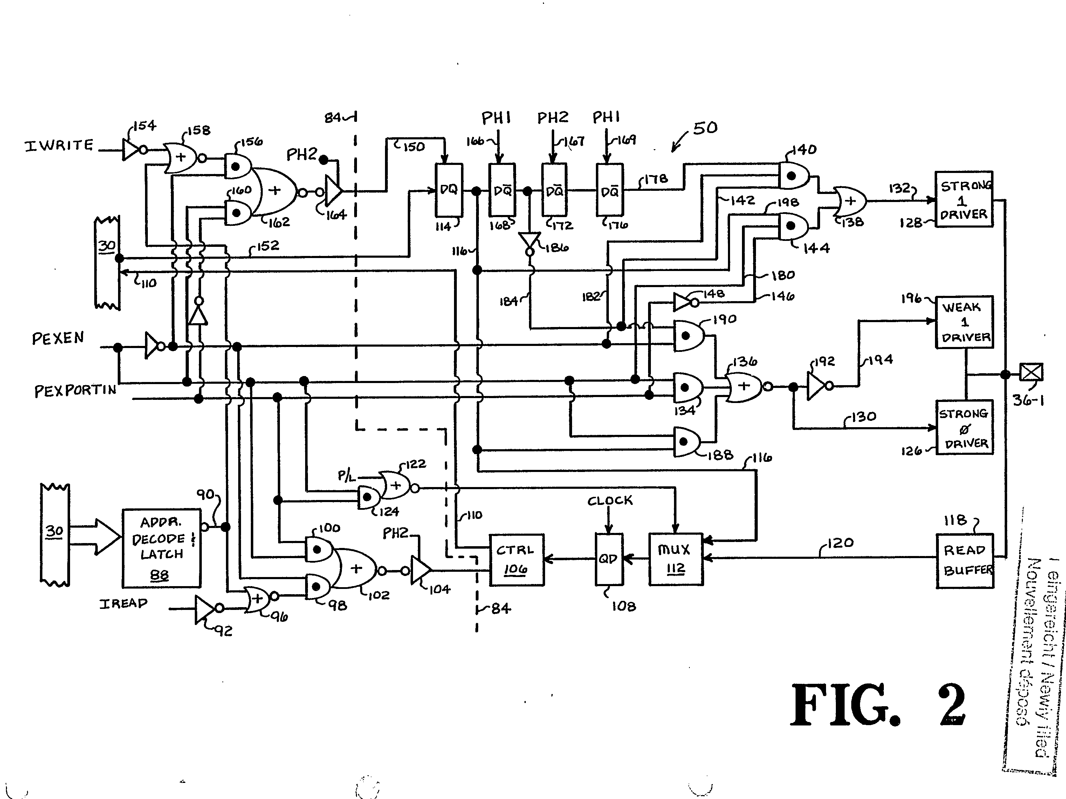

Referring to the illustrative drawings of Fig. 2, there is shown a schematic diagram of the expansion bus 50. The expansion bus 50 controls the coupling of the internal bus 30 to the eight first external terminals 36. The circuitry of the schematic diagram of Fig. 2 to the left of dashed line 84 provides control to each and every one of the eight first external terminals 36. The circuitry to the right of dashed line 84 is used only in conjunction with the individual first external terminal designated by reference numeral 36-1. Seven more circuits of the type shown to the right of dashed line 84 are included in the expansion bus 50. In order to simplify the drawing of Fig. 2, however, only one of the eight circuits of that type is shown.

In the following description, transfers of digital information from terminal 36-1 to the internal bus 30 are denoted as "Reads", and transfers from the internal bus 30 to terminal 36-1 are denoted as "Writes".

Address decode and latch circuitry 88 is used to address the expansion bus 50 when it is in OPM. When in OPM, the expansion bus 50, can be addressed by any of a plurality of respective second address signal bytes. Each of the respective second address signal bytes indicates that one or more of the first external terminals 36 is to be used for the transfer of digital information to or from the internal bus 30. In the course of Reads and Writes, the circuitry 88 provides a logical 0 signal on line 90 in response to the provision of any of the respective second address signal bytes on the internal bus 30.

When the expansion bus 50 is in OPM (PEXEN is logical 0) and a Read is to occur, the CPU 22 provides a logical 1 state IREAD signal to inverter 92. The IREAD signal is a control signal provided by the CPU 22 on one of the respective control lines 94 illustrated in Fig. 1. NORgate 96 receives the inverted IREAD signal as well as the signal provided by address decode and latch circuitry 88 on line 90. The output of NORgate 96 together with a $\overline{PEXEN}$ signal are provided to ANDgate 98. ANDgate 100 receives the PEXEN and PEXPORTIN signals. Since PEXEN is logical 0, the output of ANDgate 100 is logical 0.

The respective outputs of ANDgates 98 and 100 are inputted to NORgate 102. With the expansion bus 50 in OPM, NORgate 102 outputs a logical 0 state signal when both a logical 0 state signal is provided on line 90 (i.e., when one of the respective second address signal bytes is provided on the internal bus 30) and IREAD is in a logical 1 state. Otherwise, NORgate 102 outputs a logical 1 state signal.

When the expansion bus is in PEM (PEXEN is logical 1), NORgate 102 provides a logical 0 state signal whenever PEXPORTIN is in a logical 1 state. Otherwise, NORgate 102 outputs a logical 1 state signal. In PEM, the output of NORgate 102 is independent of whether one of the respective second address signal bytes is provided on the internal bus 30.

The output of NORgate 102 is provided to inverting gated clock driver 104. Driver 104 provides to control circuitry 106 a driven signal which has a logical state which is the logical inverse of the logical state of the signal outputted by NORgate 102. The driver 104 provides the driven signal upon the receipt of a phase 2 (PH2) clock signal explained below.

The provision by the driver 104 of a logical 1 state signal to the driver control 106 causes the driver control 106 to take the Q signal outputted by D-latch 108 and to provide that signal, via line 110, to the internal bus 30. Thus, the expansion bus 50 reads only when the output of NORgate 102 is in logical 0 state.

Multiplexer 112 selects either a signal provided on line 116 by the Q terminal of D-latch 114 or a signal provided on line 120 by a read buffer 118. The signal provided on line 116 is received from the internal bus 30 through D-latch 114. Whereas, the digital signal provided on line 120 is received from the external terminal 36-1 through the read buffer 118. The multiplexer 112 provides the selected signal to D-latch 108.

Control signals provided by NORgate 122 control selection by the multiplexer 112. A logical 0 provided by NORgate 122 causes the multiplexer 112 to select the signal provided by the read buffer 118, and a logical 1 signal provided by NORgate 122 causes the multiplexer 112 to select the signal provided by D-latch 114.

ANDgate 124 receives the PEXEN and the PEXPORTIN signals, and provides its output to NORgate 122. A pin/latch (P/L) signal also is provided to the NORgate 122. The P/L signal is a control signal provided by the CPU 22 on control lines 94 shown in Fig. 1. A logical 1 state P/L signal always causes the multiplexer 112 to select the digital information provided by the read buffer 118. The coupling of NORgate 122 and ANDgate 124 ensures that during Reads when the expansion bus 50 is in PEM (PEXPORTIN and PEM both logical 1), the multiplexer 112 always selects the digital information provided by the read buffer 118.

During Reads , both the strong 0 driver 126 and the strong 1 driver 128 are in OFF states, and the weak 1 driver 186 is in an ON state. The strong 0 driver 126 is OFF whenever a logical 0 is provided on line 130. The strong 1 driver 128 is OFF whenever a logical 0 is provided on line 132. The weak 1 driver is ON whenever a logical 1 is provided on line 194.

When the expansion bus 50 is in PEM (PEXEN is logical 1), Reads can occur only when PEXPORTIN is in a logical 1 state. When PEXEN and PEXPORTIN both are in logical 1 states, both inputs to ANDgate 134 are logical 1, and the output of NORgate 136, therefore, is a logical 0. Thus, during Reads in PEM the strong 0 driver 126 is maintained OFF, and the weak 1 driver 196 is maintained ON.

Furthermore, during Reads in PEM, ANDgate 140 receives a logical 0 state, PEXEN signal, and ANDgate 144 receives a logical 0 state PEXPORTIN signal. Consequently, ORgate 138 provides a logical 0 signal to the strong 1 driver 128 which remains OFF.

When only the weak 1 driver 196 is in an ON state, the expansion bus 50 is in a tristate condition. In the "tristate" condition terminal 36-1 is not driven by either the strong 1 driver 128 nor by the strong 0 driver 126.

In order to write digital information from the internal bus 30, via the expansion bus 50 to external terminal 36-1, a logical 1 signal must be provided on line 150 to D-latch 114. In response, the D-latch 114 inputs the digital signal received on line 152 (referred to herein as "Writedata") from the internal bus 30.

In the course of Writes, logical 1 state Writedata is driven by the strong 1 driver 128. Conversely, logical 0 Writedata is driven by the strong 0 driver 126.

When during Writes the expansion bus 50 is in OPM (PEXEN is logical 0), the inputs to ANDgate 156, NORgate 158 and inverter 154 control the logical state of the signal on line 150 that controls D-latch 114. In OPM, when an IWRITE signal is logical 1 (IWRITE is provided by CPU 22 on lines 94 shown in Fig 1), and the address decode and latch circuitry 88 provides on line 90 a logical 0 signal (a respective second address signal byte is provided on the internal bus 30), and PEXEN is logical 1, the output of ANDgate 156 is logical 1. Furthermore, in OPM, PEXEN provided to ANDgate 160 is logical 0, and therefore, the output of ANDgate 156 always is logical 0. For the signals just described, the output of NORgate 162 is logical 0, and the inverting gated clock driver 164 provides a logical 1 signal on line 150 upon the provision of a next PH2 clock. Thus, upon the provision of a next PH2 clock signal, the D-latch 114 inputs the Writedata.

During Writes in PEM (PEXEN is logical 1), the inputs to ANDgate 160 control the logical state of the signal on line 150. In PEM, ANDgate 160 provides a logical 1 signal to NORgate 162 except when PEXPORTIN is a logical 0, that is, except when the expansion bus 50 is in the course of reading digital information from external terminal 36-1. It will be noted that in PEM, ANDgate 156 receives a logical 0 state PEXEN signal. Thus, in PEM the output of ANDgate 156 always is logical 0. Consequently, in PEM NORgate 162 provides a logical 0 only when PEXPORTIN is a logical 0. Inverting gated clock driver 164, in response to a logical 0 from NORgate 162, provides on line 150 a logical 1 upon the occurrence of a next PH2 clock signal.

When during Writes a logical 1 state signal is provided on line 150, D-latch 114 inputs the Writedata on line 152. Upon the occurrence of a first next PH1 clock signal on line 166, D-latch 168 inputs the Writedata and outputs the inverse of the Writedata on its $\overline{Q}$ terminal. Upon the occurrence of a second next PH2 clock signal on line 167, D-latch 172 inputs the logical inverse of the Writedata and outputs the original Writedata on its $\overline{Q}$ terminal. Upon the provision of a second next PH1 clock signal on line 166, D-latch 176 inputs the original Writedata and outputs the inverse of the Writedata on its $\overline{Q}$ terminal to line 178. Thus, three clock signals after D-latch 114 provides the Writedata on line 116, the logical inverse of the Writedata is provided by D-latch 176 on line 178 to ANDgate 140.

6

When in OPM the Writedata is a logical 1, the output of ANDgate 140 controls the operation of strong 1 driver 128. During Writes of logical 1 Writedata, ANDgate 140 provides a logical 1 signal to ORgate 138 for only two clock signals, starting with the first PH1 clock signal which causes D-latch 168 to input the Q output of D-latch 114 and lasting until the second PH1 clock signal which causes D-latch 176 to input the $\overline{Q}$ output of D-latch 172. Upon the occurrence of the second PH1 clock signal, D-latch 176 provides to ANDgate 140, a logical 0. Since, in OPM, ANDgate 144 always receives a logical 0 PEXEN signal, the output of the ANDgate 144 always is a logical 0. Thus, in OPM strong 1 driver 128 during Writes of logical 1 state Writedata, is only ON for two clock signal cycles. That two clock cycle period begins with the first PH1 clock signal causing D-latch 168 to input the logical inverse of the Writedata and ends with the second PH1 clock signal causing D-latch 176 to input the original Writedata.

When in PEM and the Writedata is a logical 1, the output of ANDgate 144 controls the operation of strong 1 driver 128. During Writes in PEM, both $\overline{PEXPORTIN}$ and PEXEN are in logical 1 states, and the output of ANDgate 144 is a logical 1 only when the D-latch 114 provides a logical 1 on line 116, that is, only when the Writedata is a logical 1. In PEM, the ANDgate 140 always outputs a logical 0 because it receives the logical 0 state $\overline{PEXEN}$ signal. Thus, in PEM the strong 1 driver 128 is ON until either a Read occurs (PEXPORTIN changes to a logical 1) or until the logical state of the Writedata changes from 1 to 0.

When in PEM and the Writedata is logical 0, ANDgate 190 controls the operation of strong 0 driver 126. NORgate 136 outputs a logical 1 signal only when the Writedata provided to ANDgate 190 by inverter 186 is logical 0. Therefore, the strong 0 driver 126 is OFF whenever inverter 186 provides a logical 1 to ANDgate 190. Furthermore, in OPM, both ANDgate 134 and ANDgate 188 always receive a logical 0 PEXEN signal and thus, always provide logical 0 outputs.

It will be noted that, during Writes of logical 1 Writedata in OPM, the strong 0 driver 126 is OFF, and the weak 1 driver 196 is ON. The weak 1 driver 196 can be ON at the same time as the strong 1 driver 128.

When in PEM and the Writedata is logical 0, NORgate 136 will output a logical 1 only when the Writedata provided to ANDgate 188 by D-latch 114 is a logical 0. Therefore, the strong 0 driver 126 is ON only when a logical 0 is outputted by the D-latch 114. Otherwise, the weak 1 driver 196 is ON. During Writes in PEM, ANDgate 190 receives a logical 0 $\overline{PEXEN}$ signal and outputs a logical 0, and ANDgate 136 receives a logical 0 PEXPORTIN and outputs a logical 0.

When the expansion bus 50 is in OPM during Writes, the Writedata is not driven by either the strong 1 driver 128 or the strong 0 driver 126 until after the Writedata is provided by the inverter 186. The inverter 186 does not provide the Writedata until after the provision of the first PH1 clock signal to D-latch 168 causes it to input the Writedata from D-latch 114.

In contrast, when the expansion bus 50 is in PEM during Writes, the Writedata is driven substantially as soon as it is provided by D-latch 114 on line 116.

Thus, in PEM Writedata is driven on terminal 36-1 substantially without delay after being latched by D-latch 114. Whereas, in OPM the Writedata is driven on terminal 36-1 only after a PH2 clock signal causes D-latch 168 to input the Writedata provided by the D-latch 114. Consequently, in PEM the expansion bus 50 operates like a bus, driving Writedata on terminal 36-1 as soon as D-latch 114 provides it at its Q terminal. In OPM, however, the expansion bus 50 operates more like an ordinary port, driving Writedata on terminal 36-1 only after a PH1 clock signal causes D-latch 168 to input the Writedata from D-latch 114.

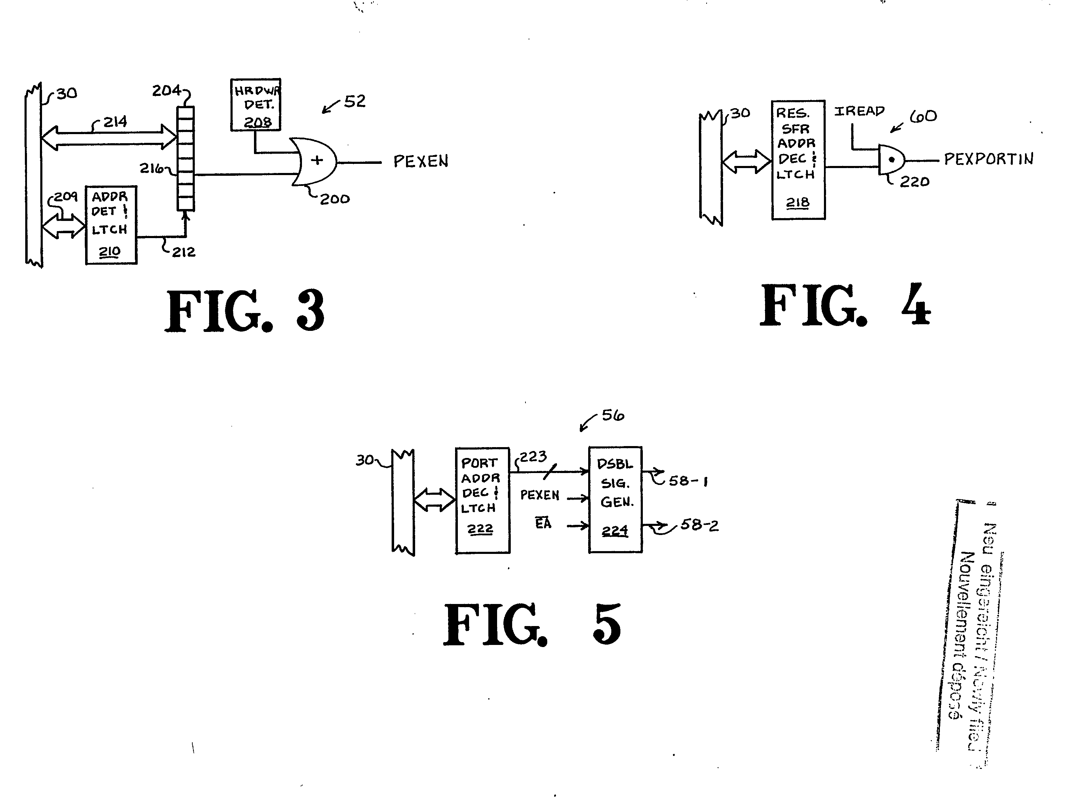

Referring now to the illustrative drawings of Fig. 3, there are shown details of the port expansion mode control 52. ORgate 200 provides the PEXEN signal which determines whether the expansion bus 50 is in OPM or PEM. PEXEN will be in a logical 1 state when either a logical 1 signal is provided by special function register 204 or by hardware detect circuitry 208.

The logical state of the signal provided by register 204 can be controlled by a computer program run by the microcontroller 20. Computer programs of the type that can provide such control form will be understood by those skilled in the art and need not be described herein. For example, in operation a computer program run by the microcontroller 20, can cause the provision of an address byte on the internal bus 30 and lines 209 which address register 204. Address detection and latch circuitry 210 detects and latches such an address byte. Circuitry 210 then provides to register 204, via line 212, signals which cause register 204 to input digital information subsequently provided to it on the internal bus 30 by the lines 214. A respective one-bit register location 216 of 8-bit register 204 is coupled to ORgate 200. A logical 1 value loaded in register location 216 causes the PEXEN signal to take a logical 1 state. Thus, a computer program run by the microcontroller 20 can control the logical state of the PEXEN signal by controlling the contents of register location 216.

Alternatively, hardware detection circuitry 208 can detect the state of externally provided signals and can provide a logical 1 signal to ORgate 200 in response thereto. The apparatus and method whereby such externally provided signals can exercise such control will be understood by those skilled in the art and need

EP 0 335 502 A2

not be described herein.

Referring to the illustrative drawings of Fig. 4, there are shown details of the read detect circuitry 60. Reserved SFR address decoding latch circuitry 218 receives respective digital information from the internal bus 30. When the digital information corresponds to one of the respective first reserved address signal bytes, circuitry 218 provides to ANDgate 220 a logical 1 state signal. When the CPU 22 also provides a logical 1 state IREAD signal on control line 94, ANDgate 220 outputs a logical 1 state PEXPORTIN signal. Otherwise, ANDgate 220 provides a logical 0 state PEXPORTIN signal.

Thus, the expansion bus 50 when in PEM, can read digital information only when one of the respective reserved SFR addresses are referenced and the CPU 22 provides a logical 1 state IREAD signal. Thus, as explained more fully below, during the execution of a direct instruction in PEM, when a respective one of the first address signals is provided on the internal bus 30, digital information can be transferred directly from the first external terminals 36 to the internal bus 30 via the expansion bus 50. Such information then can be operated on directly by the CPU 22 as if the information had been obtained directly from an on-chip SFR 28.

Figure 5 shows details of the disabling control circuitry 56. Latch 44 shares a first reserved address signal byte with one of the respective reserved SFR addresses. Similarly, latch 46 shares a respective first reserved address signal byte with another one of the respective reserved SFR addresses. Thus, for example, when the first address signal byte shared by latch 44 and one of the designated SFRs addresses is provided on the internal bus 30, both latch 44 and a respective externally built SFR (if built at all) which shares the address byte are simultaneously addressed.

Port address decoding and latch circuitry 222 detects such shared first address signal bytes, and in response to the detection of a shared byte, it provides on lines 223 signals indicating whether latch 44 or latch 46 is addressed by the shared byte. The disabling signal generator receives the signals provided on lines 223 and the PEXEN signal and signal $\overline{EA}$ provided as an independent input. Signal $\overline{EA}$ is a control signal which indicates when the external terminals 38 and 40 are in the course of accessing external memory such as that illustrated in Fig. 8. The operation of signal $\overline{EA}$ in controlling access to external memory forms no part of the present invention and need not be described herein.

In PEM, the disabling signal generator 224 temporarily disables a latch (44 or 46) which is addressed by such respective shared first address signals when the corresponding terminals (38 or 40) are in the course of accessing external memory. For example, when a shared first address signal byte addresses latch 44, and the expansion bus 50 is in PEM and second and third terminals 38 and 40 are accessing external memory, then generator 224 provides on line 58-1 a signal which temporarily prevents latch 44 from latching signals provided by any of the respective external terminals 38 and prevents such signals from being supplied to the bus 30.

Thus, in PEM the disabling control circuitry 56 ensures that the digital information provided on the expansion bus 50 in response to one of the shared first address signal bytes, as described below, is not corrupted by signals received by latches 44 or 46 from external memory. The disabling control circuitry 56, therefore, ensures that in PEM the execution of a direct instruction operating upon digital information provided on the expansion bus 50 is not upset by digital information contained in latches 44 or 46.

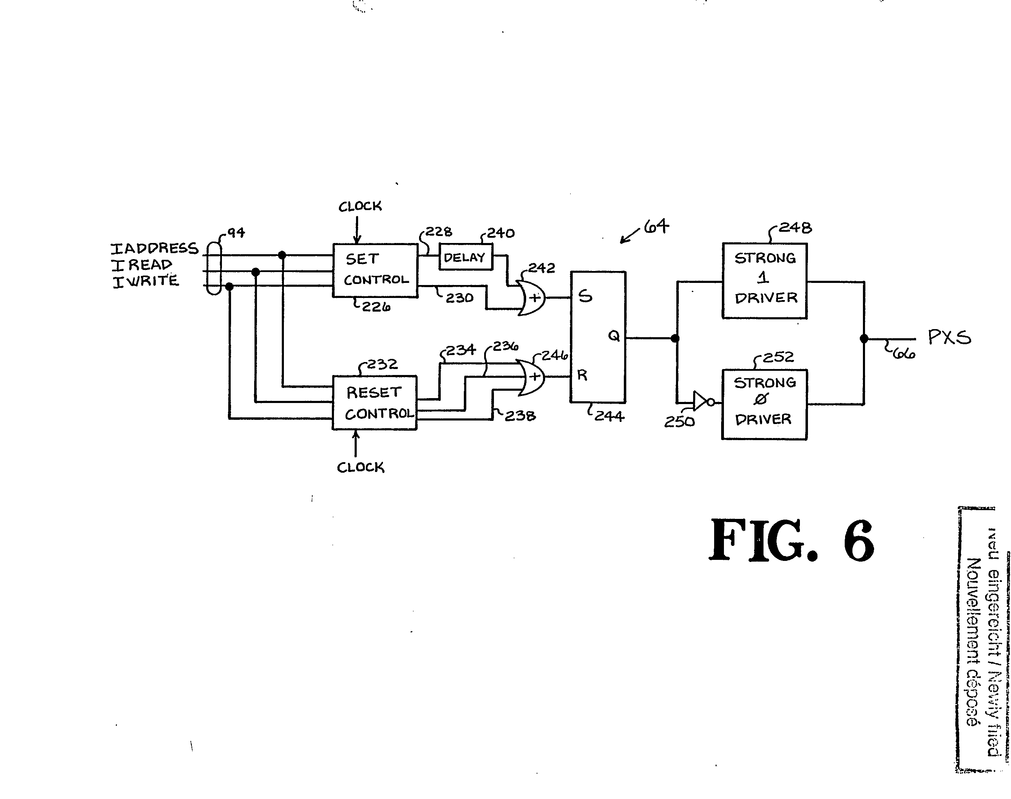

Referring now to the drawings of Fig. 6, there is shown a block diagram illustrating details of the port expansion signal (PXS) generator 64. The PXS generator 64 receives three control signals, IADDRESS, IREAD and IWRITE, provided by the CPU 22 on control lines 94 and provides as an output the PXS signal on line 66. The IADDRESS, IREAD and IWRITE signals, which are also discussed above, are internal control signals used to control Reads of digital information from internal memory locations of the microcontroller 20 and Writes of digital information to such memory locations. Internal control signals such as these are well known in the art and need not be described herein in detail.

The IADDRESS signal indicates when digital information provided on the internal bus 30 represents a memory location of the internal memory (RAM 24, ROM 26 or SFRs 28). The IREAD signal indicates that digital information is to be read from an addressed memory location. The IWRITE signal indicates that digital information is to be written to an addressed memory location.

As explained more fully below, the PXS and ALE signals together provide a signal pattern which identifies whether signals transferred on the expansion bus 50 in PEM represent address signals or represent digital information to be Read or represent digital information to be Written. From the discussion which follows, it will be appreciated that the PXS and ALE signals advantageously can be provided using only two external terminals 35 and 66, and yet can identify three types of signals on the expansion bus 50 in PEM.

The set control 226 provides on line 228 a signal identified as the Address Edge signal and provides on line 230 a signal identified as the Write Edge signal. The reset control 232 provides on line 234 the Read

8

Edge signal, provides on line 236 the No Information After Address signal and provides on line 238 the No Information After Write Signal.

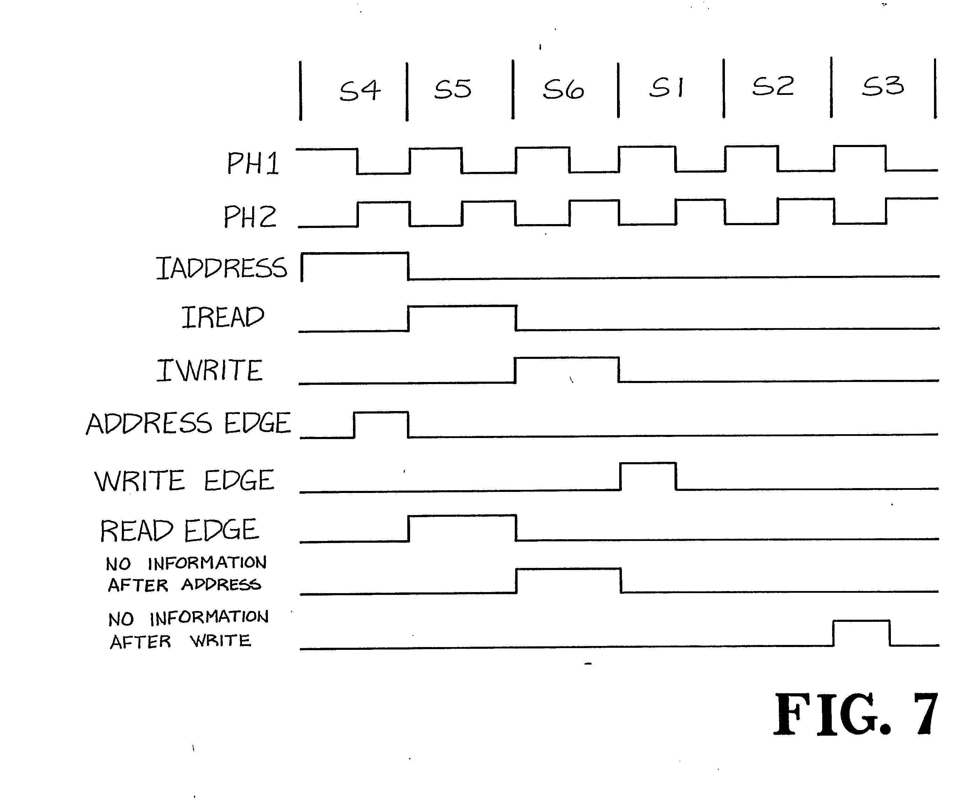

The operation of the set control 226 and the reset control 232 will be understood by reference to the timing diagram of Fig. 7. The timing circuitry 32 provides phase one (PH1) and phase two (PH2) square-edge clock signal trains which are 180° out of phase with each other. A machine cycle of the microcontroller 20 of the preferred embodiment has six states, S1 through S6. Each state includes both one complete PH1 cycle and one complete PH2 cycle.

The address Edge signal on line 228 is defined as IADDRESS(*)PH2. The Read Edge on line 234 signal is defined as IREAD. The No Information After Address signal on line 236 is defined as IWrite. The No Information After Write signal on line 238 is defined as the Write Edge signal delayed by two machine cycle states. The Write Edge signal on line 230 is defined as IWRITE(.)PH1(.) IADDRESS delayed by one machine cycle state. The IWRITE signal is used coincidentally with the IADDRESS signal to signify a bit address.

The Address Edge signal on line 228 is provided, via delay 240, to ORgate 242. The delay ensures that the digital information on the terminals 36 is stable (finishes switching) before PXS switches. The Write Edge signal on line 230 also is provided to ORgate 242. The output of ORgate 242 is provided to the Set terminal of SR flip-flop 244.

The Read Edge signal on line 234, the No Information After Address signal on line 236 and the No Information After Write signal on line 238 are provided to ORgate 246. The output of ORgate 246 is provided to the Reset terminal of SR flip-flop 244.

The Q terminal of the SR flip-flop 244 is coupled to strong 1 driver 248 and to inverter 250. The output of inverter 250 is coupled to strong 0 driver 252. The respective drivers 248 and 252 are coupled so that the driver that is turned ON provides the PXS signal on line 66.

The system 253 of Fig. 8 is shown in order to illustrate the advantages of use of the microcontroller 20 of the present invention. The system 253 illustrates only one exemplary use of the novel microcontroller 20 and is not intended to limit the invention.

In Fig. 8, the microcontroller 20 is coupled, via first external terminals 36 to an external bus 254. The external bus 254 communicates digital information from the first external terminals 36 to external Address decode and latch 256. It also communicates digital information between the first external terminals 36 and respective first, second and third external SFR/ports 258, 260 and 262. Respective external terminals 35 and 66 provide the ALE and PXS signals to an external strobe generator 264 which provides respective external control signals referred to as EADDRESS, EREAD and EWRITE strobes on respective lines 266, 268 and 270. The respective second and third external terminals 38 and 40 are coupled, via 16-bit external address and data bus 284, to external memory 286. The fourth external terminals 42 can, for example, provide for general I/O, but also can perform other functions such as timer strobes, interrupt inputs, external RAM read and write strobes, and serial port transmit and receive pins.

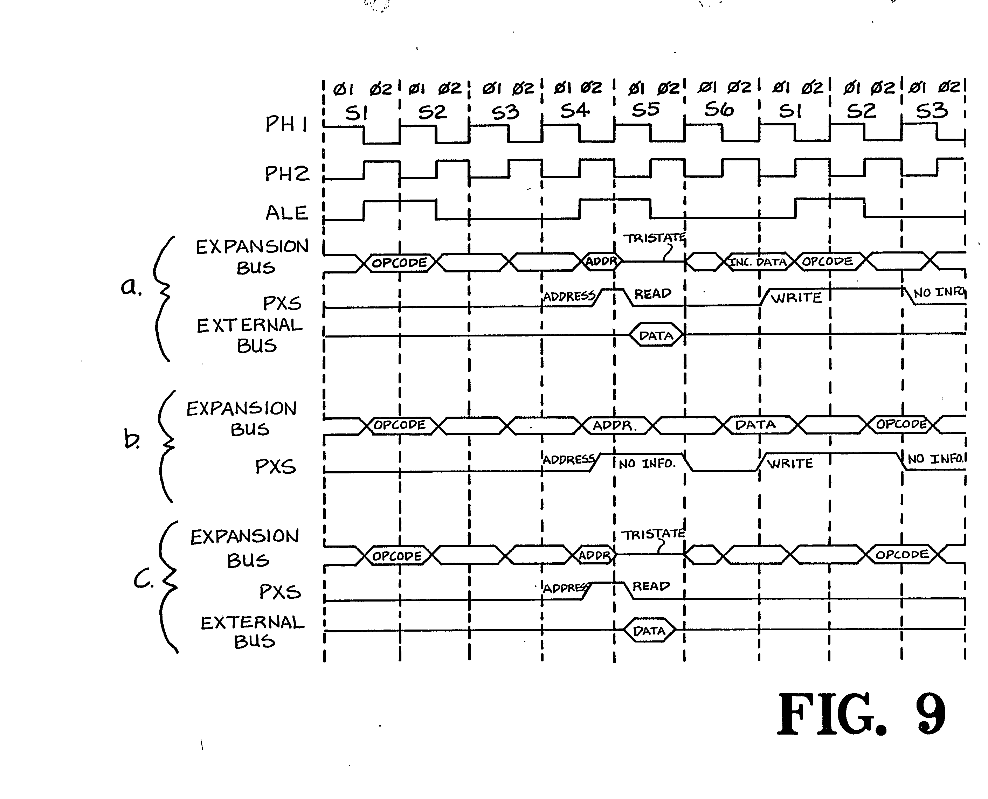

The external strobe generator 264 receives the respective ALE and PXS signals on external terminals 35 and 66 and provides the EADDRESS strobe on line 266, the EREAD strobe on line 268 and the EWRITE strobe on line 270. From the timing diagrams of Fig. 9, it can be seen that the ALE signal is a periodic signal which switches between logical 0 and logical 1 states. As explained more fully below, these three external strobes are used to identify the type of digital information on the external bus 254 and to control the three external SFR/ports 258, 260 and 262.

The following Table illustrates the relationship between the signal patterns of the ALE and PXS signals, and the identity of digital information on the external bus 254 and the function to be performed in response to the PXS and ALE signal patterns.

TABLE

| ALE | PXS | Function | Description |
|------|------|----------|-------------|
| HIGH | LOW to HIGH | Address Strobe | External SFR/Port Address should be latched from the Port Expansion Bus |
| HIGH | HIGH to LOW | Read Strobe | Read Data from the most recently latched external SFR/port address should be driven onto the Port Expansion Bus |
| LOW | LOW to HIGH | Write Strobe | Write Data should be latched from the Port Expansion Bus into the most recently latched external SFR/port address |
| LOW | HIGH to LOW | No Information | Switches state of PXS without affecting PEM |

In operation, the provision of an EADDRESS strobe by the strobe generator 264, indicates that the digital information provided by the microcontroller 20 represents a reserved SFR address As explained below, the external SFR/ports 258, 260 and 262 operate like externally built SFRs which are addressed by respective reserved SFR address signals. In response to an EADDRESS strobe, the external address decode and latch 256 inputs the address provided on the external bus 254 by the microcontroller 20 via the expansion bus 50, decodes it, and provides a signal on either line 272, 274 or 276 to enable the addressed external SFR/port, provided that the reserved SFR address provided on external bus 254 corresponds to one of the addresses of ports 272, 274 or 276. Thus, the address decode and latch 256 operates as the external address decode logic portion of the external SFR/ports 258, 260 and 262.

The first external SFR/port 258 is a read/write port. Digital information can be read from buffer 278 upon the provision of an EREAD strobe and the provision of a logical 1 port enable signal on line 272. Conversely, digital information can be written to latch 280 upon the provision of an EWRITE strobe and a logical 1 port enable strobe on line 272.

The second external SFR/port 260 is a write-only port. Digital information can be written to latch 282 upon the provision of an EWRITE strobe and the provision of a logical 1 port enable signal on line 274.

The third external SFR/port 262 is a read-only port. Digital information can be read from buffer 283 upon the provision of an EREAD strobe and the provision of a logical 1 port enable signal on line 276.

The timing diagrams of Figs. 9a-9c illustrate the operation of the microcontroller 20 in the system 253 in PEM in conjunction with the respective first, second and third external SFR/ports 258, 260 and 262. In the timing diagram, the six states of each machine cycle are represented as S1-S6. As mentioned above, the PH1 and PH2 square-edge clock signal trains are 180° out of phase with each other. The ALE signal is periodic: for each machine cycle, it is a logical 1 from S1Ø2 through S2Ø1 and again from S4Ø2 through S5Ø1.

Figure 9a illustrates a direct instruction in which the contents of buffer 278 of the first external port 258 are incremented by one and the resulting incremented value is provided to latch 280 of the first external port 258. It will be appreciated that the direct instruction ordinarily is used to increment the contents of a respective SFR of the microcontroller 20. However, as explained below, the three external ports are respectively addressed by respective first address signal bytes corresponding to respective ones of the reserved SFR addresses. In response to the first address signal byte addressing the first external port 258, the contents of buffer 278 are provided to the internal bus 30 via the external bus 254 and the expansion bus 50, when the EREAD signal is activated.

More specifically, during S1Ø2-S2Ø1 digital information representing an opcode is provided on the external bus 254 via the expansion bus 50 and the internal bus 30. The opcode is a direct instruction used to increment by one the contents of an SFR.

During S4Ø2, digital information representing a first address signal byte addressing one of the respective reserved SFR addresses is provided on the external bus 254 via the expansion bus 50 and the internal bus 30. The first address signal byte also addresses the first external port 258. It will be appreciated that a user can construct the address decode and latch circuit 256 such that the provided first address signal byte will cause the provision by circuit 256 of a logical 1 signal on line 272 which enables the first external port 258.

At the beginning of S4Ø2, the ALE signal on line 35 transitions from logical 0 to logical 1. Subsequently, during S4Ø2, PXS on line 66 transitions from logical 0 to logical 1. In accordance with the Table, the external strobe generator 264 provides on line 266 an EADDRESS strobe causing the address decode and latch circuit 256 to latch and decode the provided first address signal byte on the external bus 254. Since the provided first address signal byte addresses the first external port 258, the circuit 256 provides on line 272 a logical 1 signal which enables the first external port 258.

At the beginning of S5Ø2 the ALE signal on line 35 transitions from logical 1 to logical 0. Before that transition, during S5Ø1, PXS on line 66 transitions from logical 1 to logical 0. In accordance with the Table, the external strobe generator 264 provides on line 268 an EREAD strobe causing the buffer 278 of the first external port 258 to provide its contents to the external bus 254 during S5.

The digital information provided to the external bus 254 by buffer 278 is conducted, via the expansion bus 50, to the internal bus 30. The internal bus 30, in turn, conducts it to the CPU 22 which increments it by one and provides an incremented value to the internal bus 30 at S6Ø2 -S1Ø1.

Thus, the microcontroller 20 advantageously can operate upon digital information provided through the first external port 258 as if that digital information had been stored in the respective reserved SFR addresses.

During S5, while the data is being read from the first external port 258 via the expansion bus 50 the strong 0 driver 126 and the strong 1 driver 128 are OFF. Consequently, a "tristate" (i.e., only the weak 1 driver is ON) signal is provided that does not interfere with the transfer of information from expansion bus 254 to internal bus 30. between logical 1 and logical 0 is provided on the expansion bus 50. The "tristate" signal results when the read detection circuitry 60 provides a logical 1 PEXPORTIN signal. As discussed above, the logical 1 PEXPORTIN signal is provided upon the provision of one of the respective first address signal bytes and the IREAD strobe. The PEXPORTIN signal ensures that in PEM, digital information is not read from the expansion bus 50 unless one of the respective first address signal bytes is provided.

During the second occurrence of S1Ø1, the ALE signal on line 35 is logical 0. At the beginning of the second occurrence of S101, PXS transitions from logical 0 to logical 1. In accordance with the Table, the strobe generator 264 provides on line 270 an EWRITE strobe causing latch 280 of the first external port 258 to input the incremented value provided by the CPU 22 to the external bus 254 during S6Ø2-S1Ø2 via the expansion bus 50 and the internal bus 30. The direct instruction of Fig. 9a now is finished executing.

During S1Ø2-S2Ø1 a next opcode is provided. At the beginning of S3Ø1, with the ALE signal in logical 0, the PXS transitions from logical 1 to logical 0. In accordance with the Table, this PXS transition does not influence any of the external ports or the expansion bus 50.

Referring now to Fig. 9b, there is shown a timing diagram illustrating a direct instruction which transfers the contents of an accumulator register (one of the SFRs 28) to latch 282 of the second external port 260.

During S1Ø2-S2Ø1, digital information representing an opcode is provided on the external bus 254 via the expansion bus 50 and the internal bus 30. The opcode is for a direct address instruction causing the contents of the. accumulator register to be loaded into another respective SFR.

During S4Ø2-S5Ø1, digital information representing a first address signal byte used to address one of the respective reserved SFR addresses is provided on the external bus 254 via the expansion bus 50 and the internal bus 30. The first address signal byte provided during S4Ø2-S5Ø1 also addresses the second external port 260.

At the beginning of S4Ø2, the ALE signal on line 35 transitions from logical 0 to logical 1. Subsequently, after a delay during S4Ø2, PXS on line 66 transitions from logical 0 to logical 1. In accordance with the Table, the external strobe generator 264 provides on line 266 an EADDRESS strobe causing the address decode and latch circuit 256 to latch and decode the provided first address signal byte on the external bus 254. Since the byte addresses the second external port 260, the circuit 256 provides on line 274 a logical 1 signal which enables the second external port 260.

At the beginning of S5Ø2, the ALE signal on line 35 transitions from logical 1 to logical 0. At the beginning of S6Ø1, PXS on line 66 transitions from logical 1 to logical 0. In accordance with the Table, this PXS transition does not influence any of the external ports of the expansion bus 50.

During S6Ø2-S1Ø1, the contents of the accumulator are provided on the external bus 254 via the expansion bus 50 and the internal bus 30. At the beginning of the next occurrence of S1Ø1, PXS transitions from logical 0 to logical 1. In accordance with the Table, an EWRITE strobe is provided by the external strobe generator 264, and the provided data is latched by latch 282 of the second external port 260. The direct instruction of Fig. 9b now is finished executing. During S1Ø2-S2Ø1, an opcode for a subsequent instruction is provided on the external bus 254 via the expansion bus 50.

At the beginning of S1Ø2, the ALE signal transitions to logical 1, and at the beginning of S2Ø2, it transitions back to logical 0. At the beginning of S3Ø1, with the ALE signal in logical 0, the PXS transitions from logical 1 to logical 0. In accordance with the Table, this PXS transition does not influence any of the external ports of the expansion bus 50.

Referring now to Fig. 9c, there is shown a timing diagram illustrating a direct instruction which transfers the contents of buffer 282 of the third external port 262 to an accumulator register (one of the SFRs 28) of the microcontroller 20.

During S1Ø2-S2Ø1, digital information representing an opcode is provided on the external bus 254 via the expansion bus 50 and the internal bus 30. The opcode is for a direct address instruction causing the contents of a respective SFR to be loaded into the accumulator.

During S4Ø2, digital information representing a first address signal byte addressing one of the respective designated SFRs addresses is provided on the external bus 254 via the expansion bus 50 and the internal bus 30. The first address signal byte provided during S4Ø2 also addresses the third external port 262.

At the beginning of S4Ø2, the ALE signal on line 35 transitions from logical 0 to logical 1. Subsequently, during S4Ø2, PXS on line 66 transitions from logical 0 to logical 1. In accordance with the Table, the external strobe generator 264 provides on line 270 an EADDRESS strobe causing the address decode and latch 256 to latch and decode the first address signal byte on the external bus 254. Since the provided first address signal byte addresses the third external port 262, the circuit 256 provides on line 274 a port enable strobe which enables the third external port 262.

During S5Ø1, the ALE signal on line 35 is logical 1. At the beginning of S5Ø1, the PXS transitions from logical 1 to logical 0. In accordance with the Table, the external strobe generator 264 provides on line 268 an EREAD strobe causing the buffer 283 of the third external port 262 to provide its contents to the external bus 254 during S5. The data on the external bus 254 is provided via the expansion bus 50 and the internal bus 30 to the accumulator in a manner which will be understood by those skilled in the art. The direct instruction of Fig. 9c now moves the data internally to the accumulator and by time S1Ø1 is finished executing. During S1Ø2-S2Ø1 the opcode for a subsequent instruction is provided on the external bus 254 through the expansion bus 50.

It should be noted that during S5, while data is being read from the third external port 262 via the expansion bus, the strong 0 driver 126 and the strong 1 driver 128 are OFF. Consequently, a "tristate" signal between logical 1 and logical 0 is provided on the expansion bus 50.

Referring once again to Fig. 8, it can be seen that the respective second and third external terminals 38 and 40 can be coupled via lines 284 to external ROM 286. A user, therefore, advantageously can program the microcontroller 20 to simultaneously retrieve digital information from the external ROM 286 and utilize the expansion bus 50 to communicate with the external ports 258, 260 and 262.

For example, referring to Fig. 9a, during S5Ø2 while the expansion bus 50 is in PEM and is receiving digital information, the address of external ROM 286 where a next opcode byte is stored can be provided to the external ROM 286 via the program address register 70 and the program address bus 68 and the second and third external terminals 38 and 40 and lines 284. Then, during S1Ø2-S2Ø1, while the incremented data is being latched into the first external port 258, the next opcode can be read from the external ROM 286 to the external terminals 38 and 40. Thus, the microcontroller 20 can prefetch the next opcode byte while digital information is being accessed in PEM via the expansion bus 50.

Thus, the expansion bus 50 can couple multiple external ports to the microcontroller 20, thereby increasing the ability of the microcontroller 20 to simultaneously control multiple devices coupled to the external ports. Furthermore, by reserving certain SFR addresses for use in conjunction with the expansion bus 50, the microcontroller increases the speed with which digital information transferred by the expansion bus 50 can be processed. In essence, digital information provided over the expansion bus 50 in PEM is processed using a rapidly executable direct instruction. Moreover, the PXS and ALE signals permit external devices under control of the microcontroller 20 to coordinate their operations with the execution of direct instructions by the microcontroller 20.

It will be understood that the above-described embodiment is merely illustrative of many possible specific embodiments which can represent the principles of the invention. Numerous and varied other arrangements can readily be devised in accordance with these principles without departing from the spirit and scope of the invention. Thus, the foregoing description is not intended to limit the invention which is defined in the appended claims in which:

## Claims

1. A VLSI microcontroller comprising:
first means for processing digital information;
second internal means for storing digital information, said second means including a plurality of memory locations;
an internal bus for conducting digital information to and from said first means and said second means;
a plurality of first external terminals;

third means for transferring digital information between said internal bus and said plurality of first external terminals, said third means being operable in either a port mode or a bus mode;
wherein said third means in the bus mode transfers digital information only upon a provision of first digital information on said internal bus; and
wherein said third means in the port mode transfers digital information only upon a provision of second digital information on said internal bus.

2. The VLSI microcontroller of Claim 1 wherein:
said first digital information includes at least one first prescribed address byte which corresponds to none of said plurality of memory locations.

3. The microcontroller of Claim 2 wherein:
said third means in the bus mode selectively transfers digital information from said first external terminals to said internal bus only upon the provision of the at least one first prescribed address byte.

4. The VLSI microcontroller of Claim 3 wherein:
said first means provides at least one IREAD control signal and at least one IWRITE control signal;
said third means, in the bus mode, transfers digital information from said internal bus to said first external terminals in response to the at least one IWRITE control signal; and
said third means, in the bus mode, transfers digital information from said first external terminals to said internal bus in response to the at least one IREAD control signal in combination with the at least one first prescribed address byte.

5. The VLSI microcontroller of Claim 4 and further comprising:
fourth means for controlling said third means such that in the bus mode said third means can transfer digital information from said first external terminals to said internal bus only when said first means provides the at least one IREAD control signal in the course of a provision of the at least one first prescribed address byte on said internal bus.

6. The VLSI microcontroller of Claim 5 wherein said fourth means further comprises:
first decoding means for decoding the at least one prescribed first address byte.

7. The VLSI microcontroller of Claim 1 wherein:
said second digital information includes at least one second prescribed address byte; and
said third means, in the port mode, selectively transfers digital information between said first external terminals and said internal bus only upon the provision of the at least one second prescribed address byte.

8. The microcontroller of Claim 7 wherein:
said third means, in the port mode, can transfer digital information between said internal bus and said first external terminals only upon the provision of at least one second prescribed address byte.

9. The VLSI microcontroller of Claim 8 wherein said third means includes:
second decoding means for decoding the at least one second prescribed address byte provided on said internal bus.

10. The VLSI microcontroller of Claim 9 wherein:
said first means provides at least one IREAD control signal and at least one IWRITE control signal;
said third means, in the port mode, transfers digital information from said plurality of first external terminals to said internal bus in response to the at least one IREAD control signal in combination with the at least one second prescribed address byte; and
said third means, in the port mode, transfers digital information from said internal bus to said plurality of first external terminals in response to the at least one IWRITE control signal in combination with the at least one second prescribed address byte.

11. The VLSI microcontroller of Claim 1 wherein:
said third means includes at least one first latch means and at least one second latch means, for sequentially latching at least one respective bit of digital information in the course of transfers of digital information from said internal bus to said first external terminals;
said third means, in the port mode, in the course of a transfer of digital information from said internal bus to said external terminals sequentially latches at least one respective bit in said at least one first latch means, and subsequently, latches the at least one respective bit in said at least one second latch means; and
said third means, in the bus mode, in the course of a transfer of digital information from said internal bus to said external terminals latches at least one respective bit in said at least one first latch means and bypasses the at least one respective bit past said at least one second latch means.

12. The microcontroller of Claim 1 wherein said third means further comprises:
respective driver circuits for driving digital information transferred from said internal bus to said first external terminals such that the digital information can be propagated externally from said first external terminals;

and
means for preventing said respective driver circuits from driving in the course of a transfer of digital information from said first external terminals to said internal bus.

13. A VLSI microcontroller comprising:
first means for processing digital information;
second internal memory means including a plurality of memory locations;
an internal bus for conducting digital information to and from said first means and said second means;
a plurality of first external terminals;
third means for transferring digital information between said internal bus and said plurality of first external terminals, said third means being operable in either a port mode or a bus mode;
first decoding means for decoding at least one first byte;
second decoding means for decoding at least one second byte;
wherein said third means, in the bus mode, can transfer digital information from the first external terminals to said internal bus only upon the provision of the at least one first byte; and
wherein said third means, in the port mode, can transfer digital information between said internal bus and said first external terminals only upon the provision of at least one second byte.

14. The VLSI microcontroller of Claim 13 wherein:
said first means provides at least one IREAD control signal and at least one IWRITE control signal;
said third means, in the bus mode, transfers digital information from said internal bus to said first external terminals in response to the at least one IWRITE control signal;
said third means, in the bus mode, transfers digital information from said first external terminals to said internal bus in response to the at least one IREAD control signal in combination with the at least one first byte;
said third means, in the port mode, transfers digital information from said plurality of first external terminals to said internal bus in response to the at least one IREAD control signal in combination with the at least one second byte; and
said third means, in the port mode, transfers digital information from said internal bus to said plurality of first external terminals in response to the at least one IWRITE control signal in combination with the at least one second byte.

15. The VLSI microcontroller of Claims 1 or 13 and further comprising:
second external terminals; and
timing means for providing timing signals to said second external terminals, said timing signals substantially contemporaneously indicating when respective types of digital information are required to be provided on said internal bus in the course of an execution of a respective instruction by said first means.

16. The VLSI microcontroller of Claim 15 wherein:
said timing signals can indicate when each of at least three types of digital information are required to be provided on said internal bus in the course of an execution of a respective instruction by said first means.

17. The VLSI microcontroller of Claim 16 wherein:
said at least three types of digital information respectively represent at least one address location, data to be provided to said first means and data provided by said first means.

18. The VLSI microcontroller of Claim 15 wherein:
said first means (22) provides respective control signals; and
said timing means (32, 64) is responsive to the respective control signals.

19. The VLSI microcontroller of Claim 18 wherein:
said first means provides at least one IWRITE control signal, at least one IREAD control signal and at least one IADDRESS control signal; and
said timing means is respectively responsive to the at least one IWRITE control signal, the at least one IREAD control signal and the at least one IADDRESS control signal.

20. The VLSI microcontroller of Claim 13 which includes no more than two second external terminals.

21. The VLSI microcontroller of Claim 13 wherein the at least one first byte is an address signal byte which corresponds to none of said plurality of memory locations.

22. The VLSI microcontroller of Claim 21 wherein said third means, in the bus mode, provides said at least one first byte to said plurality of first external terminals.

23. A VLSI microcontroller comprising:
first means for processing digital information;
wherein said first means provides at least one IREAD control signal and at least one IWRITE control signal;
second means for storing digital information, said second means including a plurality of memory locations;
an internal bus for conducting digital information to and from said first means and said second means;

14

a plurality of first external terminals; said second means being operable in either a port mode or a bus mode;

third means for transferring digital information between said internal bus and said plurality of first external terminals, said third means being operable in either a port mode or a bus mode;

first decoding means for decoding at least one first address byte;

second decoding means for decoding at least one second address byte;

wherein said third means, in the bus mode, transfers digital information from said internal bus to said first external terminals in response to the at least one IWRITE control signal;

wherein said third means, in the bus mode, transfers digital information from said first external terminals to said internal bus in response to the at least one IREAD control signal in combination with the at least one first address byte;

wherein said third means, in the port mode, transfers digital information from said plurality of first external terminals to said internal bus in response to the at least one IREAD control signal in combination with the at least one second address byte;

wherein said third means, in the port mode, transfers digital information from said internal bus to said plurality of first external terminals in response to the at least one IWRITE control signal in combination with the at least one second address byte;

no more than two second external terminals; and

timing means for providing timing signals to said second external terminals, said timing signals substantially contemporaneously indicating when respective types of digital information are required to be provided on said internal bus in the course of an execution of a respective instruction by said first means; and

wherein said timing means is responsive to the at least one IREAD control signal and to the at least one IWRITE control signal.

24. A VLSI microcontroller comprising:

processor means for processing digital information;

wherein said processor means is adapted to execute direct instructions only for a prescribed set of address bytes;

memory means for storing digital information, said memory means including a plurality of memory locations;

wherein the prescribed set of address bytes includes at least one reserved address byte which corresponds to none of said respective memory locations;

internal bus means for conducting digital information between said processor means and said memory means;

a plurality of first external terminals; and

transfer means for transferring the at least one reserved address byte from said internal bus means to said plurality of first external terminals on a first digital signal path and for providing a second digital signal path from said plurality of first external terminals to said internal bus means.

25. The VLSI microcontroller of Claim 24 wherein:

said processor means selectively provides IREAD control signals and IWRITE control signals; and

said transfer means transfers the at least one reserved address byte in response to at least one IWRITE control signal; and

said transfer means provides said second digital signal path in response to at least one IREAD control signal.

26. The VLSI microcontroller of Claim 24 and further comprising:

second external terminals; and

timing means for providing timing signals to said second external terminals to indicate, in the course of the execution of a direct address instruction by said processor means, when at least one address byte is to be provided to said internal bus means, when data is to be transferred from said internal bus means to said first external terminals and when said second digital signal path from said first external terminals to said internal bus means is to be provided.

27. In a VLSI microcontroller including processor means for processing digital information, said processor means being adapted to execute direct instructions for a prescribed set of address bytes; memory means for storing digital information, said memory means including a plurality of memory locations; internal bus means for conducting digital information between said processor means and said memory means; and a plurality of external terminals, a method for executing at least one direct address instruction comprising the steps of:

providing on said internal bus means at least one address byte from the prescribed set which corresponds to none of said memory locations;

15

transferring the at least one address byte to said first external terminals;

after said step of transferring, providing a first digital signal path from said first external terminals to said internal bus means.

28. The method of Claim 27 wherein said step of transferring further comprises providing a second digital signal path from said internal bus means to said first external terminals.

29. The method of Claim 27 and further comprising the step of:

Providing timing signals to second external terminals, the timing signals substantially contemporaneously indicating when respective types of digital information are required to be provided on said internal bus means in the course of the execution of the at least one direct address instruction.

16

FIG. 1

sicht / Newly filed
nouvellement déposé

FIG. 2

FIG. 3

FIG. 4

FIG. 5

EP 0 335 502 A2

FIG. 6

EP 0 335 502 A2

FIG. 7

EP 0 335 502 A2

FIG. 8

EP 0 335 502 A2

FIG. 9

EP 0 335 502 A2